# EUROPEAN PATENT SPECIFICATION

(11) **EP 2 557 060 B1**
(45) Date of publication and mention of the grant of the patent: **06.10.2021**
(21) Application number: 11765452.5
(22) Date of filing: 25.03.2011
(51) Int. Cl.: B65H 5/06, B65H 27/00

(54) **PAPER SHEET CONVEYING ROLLER**
WALZE ZUR FÖRDERUNG VON PAPIERBAHNEN
ROULEAU DE TRANSPORT DE FEUILLE DE PAPIER

(30) Priority: 08.04.2010 JP 2010089678
(43) Date of publication of application: 13.02.2013
(73) Proprietor: Nitta Corporation, Osaka-shi, Osaka 556-0022 (JP)
(72) Inventor: ISHIBASHI Yukuhiko, Yamatokoriyama-shi Nara 639-1085 (JP); SHIMADA Tomohisa, Yamatokoriyama-shi Nara 639-1085 (JP); UEDA Yasuhisa, Yamatokoriyama-shi Nara 639-1085 (JP); OKAMOTO Akifumi, Yamatokoriyama-shi Nara 639-1085 (JP)
(74) Representative: Schaumburg und Partner Patentanwälte mbB
(86) International application number: PCT/JP2011/057413
(87) International publication number: WO 2011/125551

(56) References cited:
- JP-A- 8 081 079
- JP-A- 2001 225 983
- JP-A- 2001 225 983
- JP-A- 2007 045 359
- JP-A- 2007 045 359
- JP-B1- 3 496 024
- JP-U- 62 038 255
- JP-U- 62 091 703
- None

## Description

### TECHNICAL FIELD

The present invention relates to a paper sheet conveying roller to be used for sheet-feeding in a printer, a multifunction machine, a copying machine, a facsimile machine and the like, for example.

### BACKGROUND ART

There is a case that a hollow roller is used for sheet-feeding in a printer, a copying machine, a multifunction machine, a facsimile machine and the like. The hollow roller is structured with a support body which supports a roller body having a shaft inserted inside thereof and the roller body arranged on the outer peripheral side of the support body. For example, the roller body has a structure with ring-shaped side walls that are interconnected respectively with both ends in the axial direction of a tubular section having a cavity inside thereof. The roller body described above is attached to the support body with the inner peripheral edges of the ring-shaped side walls fitted in the annular grooves formed on the outer peripheral surface of the support body.

With this kind of hollow roller, its structure can be adapted to prevent the roller body from being slidingly rotated in the circumferential direction against the support body. For example, in a hollow roller disclosed in PATENT DOCUMENT 1, an inner peripheral surface of an annular groove and an inner peripheral edge of a ring-shaped side wall are formed to have an arc-like cross-sectional shape, and the contact area between the annular groove and the inner peripheral edge is enlarged to allow contact in an elastic manner, so that a sliding rotation of the roller body in the circumferential direction is prevented.

JP 2001 225983 A discloses a paper sheet conveying roller according to the preamble of claim 1.

### PATENT DOCUMENT 1:

Japanese Patent No. 3496024

### SUMMARY OF THE INVENTION

### PROBLEM TO BE SOLVED BY THE INVENTION

With the structure of the contact area enlarged so that the inner peripheral edge makes contact with the annular groove in an elastic manner as in PATENT DOCUMENT 1, the rotation of the roller body is restricted only by frictional force. Therefore, there is a case that sliding rotation of the roller body cannot be sufficiently prevented depending on the manner of usage. Here, it is conceivable to bond the inner peripheral edge to the inside of the annular groove with an adhesive. However, with such a structure, it becomes difficult to remove the roller body from the support body.

To address the above problems, an object of the present invention is to provide a paper sheet conveying hollow roller which is capable of effectively preventing a sliding rotation of a roller body against a support body.

### MEANS FOR SOLVING THE PROBLEMS

A paper sheet conveying roller according to the present invention includes a support body which has first and second annular grooves formed on an outer peripheral surface and to which a shaft portion is arranged, and a roller body formed with a tubular section, which is arranged to form a cavity between the support body and the tubular section at an outer peripheral side of the support body, and first and second ring-shaped side walls that are interconnected, respectively, with both ends of the tubular section in the axial direction and have respective inner peripheral edges fitted in the first and second annular grooves, respectively.

In the present invention, a protrusion or a recess is arranged at a circumferential section of an inner peripheral edge of one or both of the first and second side walls, and a recess or a protrusion fitted to the protrusion or recess is configured at one or both of the first and second annular grooves.

It is preferable that the protrusion protrudes in the axial direction from the circumferential section of the inner peripheral edge. In this case, the recess is arranged so that it branches out from at least one of the first and second annular grooves. For example, it is preferable that the recess is a groove which extends outward in the axial direction from one or both of the first and second annular grooves and opens to an end face of the support body in the axial direction.

The protrusion protrudes from the circumferential section of the inner peripheral edge, preferably, outward in the axial direction, and more preferably, bilaterally in the axial direction. It is preferable that the inner peripheral edge is thickly formed so that it expands in the axial direction. The protrusion protrudes in the axial direction from the thickly formed inner peripheral edge.

The recess may be concave in the axial direction at the thickly formed inner peripheral edge. The protrusion may protrude inward in the radial direction from the inner peripheral edge, and in this case the recess would also be concave inward in the radial direction from a bottom face of the annular groove. The recess may be concave outward in the radial direction from an inner side of the inner peripheral edge, and in this case the protrusion would protrude outward in the radial direction from a bottom face of the annular groove. Further, a vent hole to allow air in the cavity to be discharged may be configured in the roller body.

It is preferable that a plurality of the protrusions or recesses is circumferentially arranged on the inner peripheral edge. Knitted fabric placed on an inner peripheral surface or embedded internally may be arranged on the roller body where it is not exposed to an outer peripheral surface.

### EFFECT OF THE INVENTION

According to the present invention, since the protrusion or the recess configured on the inner peripheral edge of the side wall is fitted to the recess or the protrusion arranged in the annular groove, the roller body is prevented from being slidingly rotated in the circumferential direction against the support body.

### BRIEF DESCRIPTION OF THE DRAWINGS

Fig. 1 is a front view illustrating a paper sheet conveying roller of the present invention.
Fig. 2 is a sectional view of a support body of a first embodiment according to the present invention.
Fig. 3 is a sectional view illustrating a roller body before being attached to the support body of the first embodiment.
Fig. 4 is a sectional view with the direction of sight indicated by the arrows at line IV-IV in Figs. 1 and 5.
Fig. 5 is a top view of the paper sheet conveying roller of the first embodiment in which only inner peripheral edges and protrusions of the roller body are illustrated as shaded areas and the rest thereof are eliminated.
Fig. 6 is a sectional view with the direction of sight indicated by the arrows at line VI-VI in Figs. 1 and 5.
Fig. 7 is a sectional view with the direction of sight indicated by the arrows at line VII-VII in Fig. 5.
Figs. 8(A) to 8(E) are sectional views illustrating modified examples of the inner peripheral edge and the annular groove.
Fig. 9 is a sectional view illustrating a roller body of a second embodiment.
Fig. 10 is a sectional view of the roller body of the second embodiment illustrating the structure of an inner peripheral edge at a section where a protrusion is arranged.
Fig. 11 is a sectional view illustrating a modified example of the roller body of the second embodiment.
Fig. 12 is a sectional view illustrating a paper sheet conveying roller of a third embodiment.
Fig. 13 is a sectional view illustrating a structure with a protrusion fitted in a branched groove in a fourth embodiment with the direction of sight indicated by the arrows at line A-A in Fig. 14.
Fig. 14 is a top view of the paper sheet conveying roller of the fourth embodiment in which only inner peripheral edges and protrusions of the roller body are illustrated as shaded areas and the rest thereof are eliminated.
Fig. 15 is a top view of the paper sheet conveying roller of a fifth embodiment in which only inner peripheral edges and protrusions of the roller body are illustrated as shaded areas and the rest thereof are eliminated.
Fig. 16 is a sectional view with the direction of sight indicated by the arrows at plane line B-B in Fig. 15.
Fig. 17 is a sectional view illustrating a paper sheet conveying roller of a sixth embodiment with the direction of sight indicated by the arrows at plane line C-C in Fig. 18.
Fig. 18 is a sectional view with the direction of sight indicated by the arrows at line D-D in Fig. 17.
Fig. 19 is a sectional view illustrating a paper sheet conveying roller of a seventh embodiment with the direction of sight indicated by the arrows at line E-E in Fig. 20.
Fig. 20 is a sectional view with the direction of sight indicated by the arrows at line F-F in Fig. 19.
Fig. 21 is a sectional view illustrating a paper sheet conveying roller of an eighth embodiment with the direction of sight indicated by the arrows at line G-G in Fig. 22.
Fig. 22 is a plane view illustrating the paper sheet conveying roller of the eighth embodiment.

### EXPLANATION OF REFERENCES

- 10:: paper sheet conveying roller
- 11:: shaft
- 12:: support body
- 13, 13:: annular groove (first and second annular grooves)
- 14A, 14B:: first and second branched grooves (recesses)
- 19:: cavity
- 20:: roller body
- 21:: tubular section
- 22, 22:: side wall (first and second side walls)
- 25, 25:: inner peripheral edge
- 26A, 26B:: first and second protrusions
- 40:: knitted fabric
- 50, 61, 70:: recess
- 51, 60, 71:: protrusion

### EMBODIMENT OF THE INVENTION

In the following, embodiments of the present invention will be described with reference to the drawings.

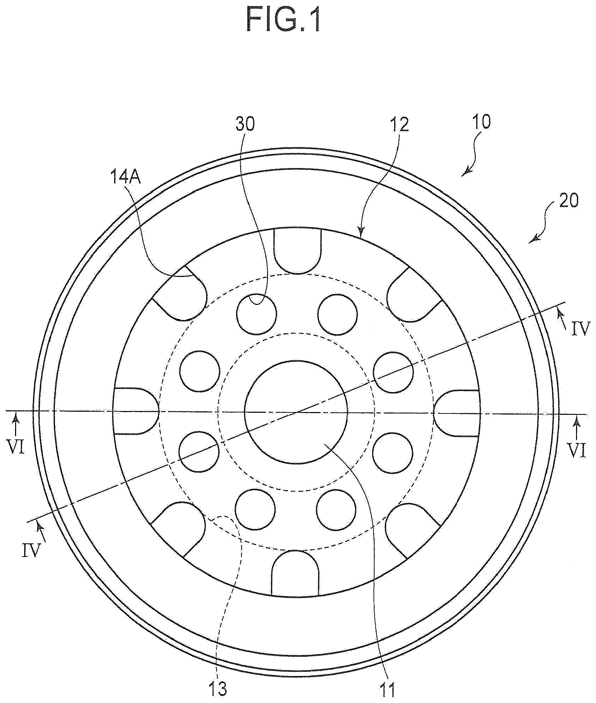

First, an outline of a paper sheet conveying roller according to a first embodiment of the present invention will be described with reference to Figs. 1 to 4.

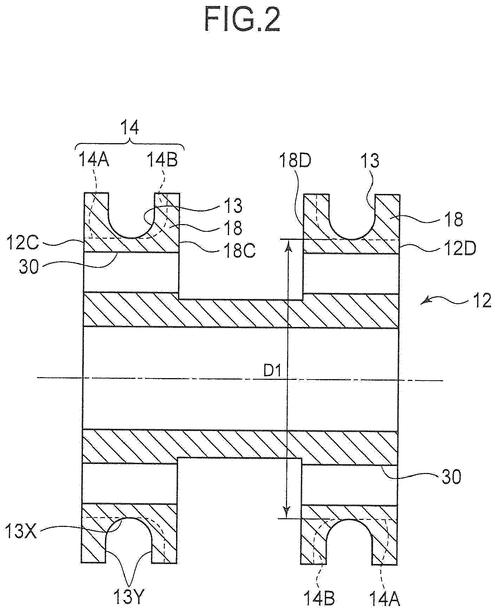

As illustrated in Fig. 1, a paper sheet conveying roller 10 is structured to include a roller body 20 attached to an outer peripheral side of a support body 12. The support body 12 is tubular-shaped with a shaft 11 structured so that a rotary shaft (shaft portion) of the roller 10 is inserted to an inner peripheral side thereof. As illustrated in Fig. 2, both ends of the support body 12 in the axial direction are formed to have an outer diameter being a size larger than that of the section between the both ends, so that the ends are configured as flange sections 18, 18 extending outward. For example, the support body 12 is formed of hard resin, metal, or the like.

An annular groove 13 is formed in an outer peripheral surface of each flange section 18 (i.e., support body 12) along the circumferential direction. As is evident from Fig. 2, each annular groove 13 is formed with a groove bottom face 13X being cross-sectionally semicircular or arc-shaped, and groove side faces 13Y, 13Y being flat faces which are approximately perpendicular to the axial direction. Further, a branched groove 14 (first and second branched grooves 14A, 14B) branching out from the annular groove 13 is configured in the outer peripheral surface of each flange section 18 (i.e., support body 12).

A plurality of circular penetration holes 30 penetrating in the axial direction is arranged at each flange section 18. The plurality of penetration holes 30 is arranged to surround the shaft 11 at regular intervals in the circumferential direction. Each penetration hole 30 has one opening toward an end face 12C, 12D (outer side face of the flange section 18, 18) of the support body 12 in the axial direction and the other opening toward an inner side face 18C, 18D of the flange section 18, 18. Each penetration hole 30 provides access between the outside of the roller 10 and a space between the flanges 18, 18 (i.e., later-mentioned cavity 19).

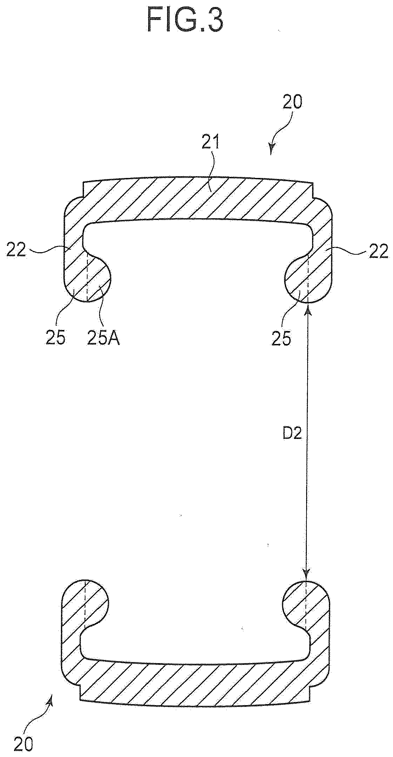

As illustrated in Fig. 3, the roller body 20 is structured with a tubular section 21 having an approximately tubular shape so that an outer peripheral surface thereof makes contact with a paper sheet and both side walls 22, 22 are interconnected, respectively, with both ends of the tubular section 21 in the axial direction in an integrated manner. The tubular section 21 and both of the side walls 22, 22 are formed like a thin-film shape. The tubular section 21 is capable of exerting conveying force to a paper sheet, for example, with irregularities arranged on the outer peripheral surface thereof.

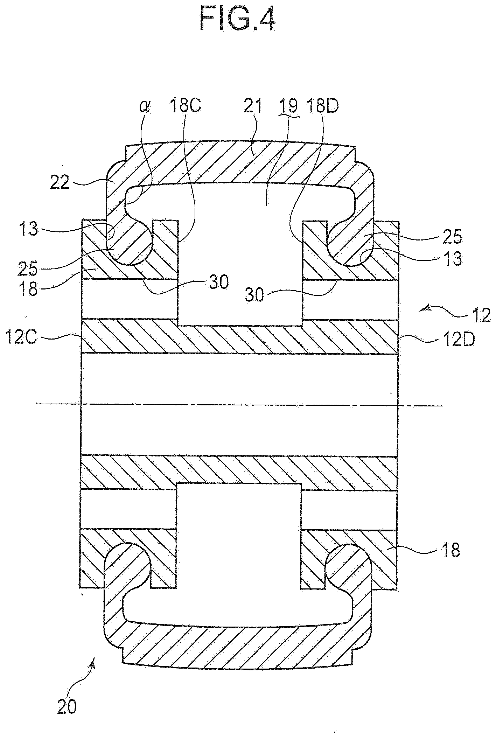

Each side wall 22 is formed into an approximately annular ring shape and protrudes inward in the radial direction from the entire periphery at each of both ends in the axial direction of the tubular section 21. Each side wall 22 is approximately perpendicular to the axial direction when attached to the support body 12. That is, each side wall 22 is interconnected with each of both ends in the axial direction of the tubular portion 21 having a connection angle α (see Fig. 4) of 90°. Here, the connection angle α may be larger or smaller than 90°.

An inner peripheral edge 25 of each side wall 22 is formed thicker than other parts of the side wall 22. Specifically, each inner peripheral edge 25 is provided with an enlarged portion 25A semi-circularly expanded inward in the axial direction from the side wall 22 and formed into an approximately circular cross-sectional shape as a whole. Here, the diameter of the circle is larger than the thickness of the side wall 22. Further, the inner peripheral edge 25 is thick in shape along the entire periphery.

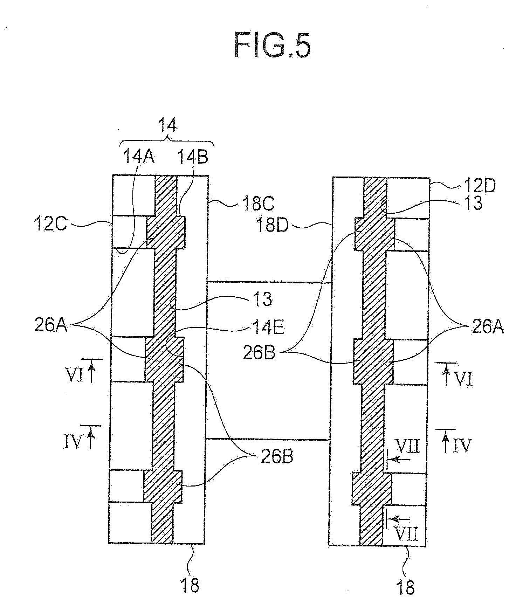

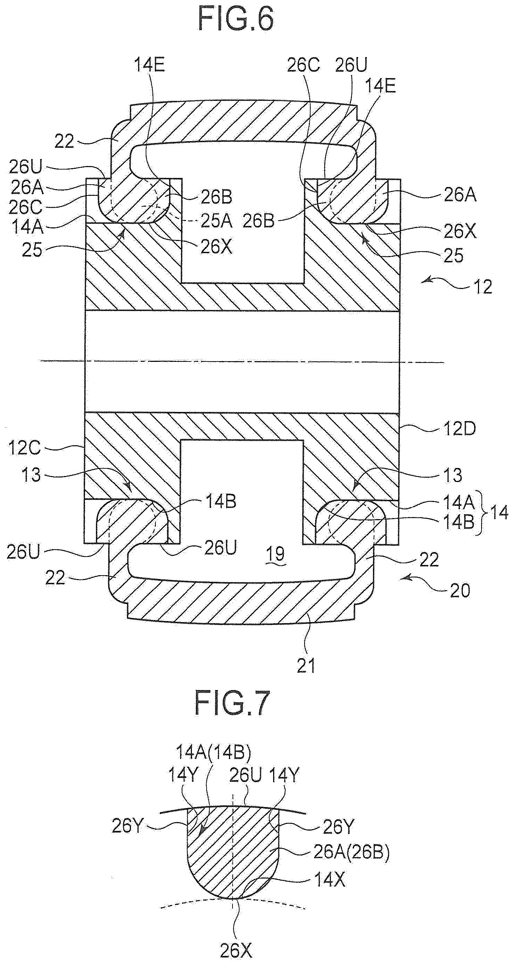

The abovementioned groove bottom face 13X of the annular groove 13 has a shape that approximately matches the outer peripheral surface of the inner peripheral edge 25 (outer peripheral surface of an approximately semicircular interior section in the radial direction). Accordingly, when the inner peripheral edge 25 is fitted in the annular groove 13 as described later, the outer peripheral surface of the inner peripheral edge 25 is in intimate contact with an inner peripheral surface of the annular groove 13. As described later, pluralities of first and second protrusions 26A, 26B (see Figs. 5 and 6) further protrude bilaterally in the axial direction at regular intervals in the circumferential direction and are formed integrally with each inner peripheral edge 25.

The roller body 20 is formed of elastomer such as rubber. Examples of the rubber include millable urethane, natural rubber (NR), styrene-butadiene rubber (SBR), ethylenepropylene-diene rubber (EPDM), nitrile rubber (NBR), silicon rubber (VMQ), chloroprene rubber (CR), chlorinated butyl rubber (Cl-IIR), chloro-sulfonated polyethylene rubber (CSM), isoprene rubber (IR), butadiene rubber (BR), ethylenepropylene rubber (EPM), butyl rubber (IIR), fluoro rubber (FKM), acrylic rubber (ACM), and any mixture thereof.

As illustrated in Fig. 4, the roller body 20 is arranged on the outer peripheral side of the support body 12 so that the cavity 19 is formed between the tubular section 21 and the outer peripheral surface of the support body 12. The inner peripheral edges 25, 25 of both of the side walls 22, 22 are fitted, respectively, in the annular grooves 13, 13, thereby the roller body 20 is attached to the support body 12. Here, as described later, when the inner peripheral edges 25, 25 are fitted in the annular grooves 13, 13, the first and second protrusions 26A, 26B are fitted in the first and second branched grooves 14A, 14B (see Fig. 5).

The roller body 20 is made of elastomer, and being of elastic material it is provided with high elasticity so that the cavity 19 is formed inside thereof. That is, the roller body 20 is easily deformed in accordance with a pressing state from the outside. In accordance with a deformation state of the roller body 20, the roller 10 can either discharge air from the cavity 19 to beyond the roller or feed air from the outside into the cavity 19 via the penetration holes 30.

In the present embodiment, an inner diameter D2 of the roller body 20 (i.e., inner peripheral edge 25) before being attached to the support body 12 is smaller than an outer diameter D1 of the support body 12 at the bottom part of the annular groove 13, as illustrated in Figs. 2 and 3. Therefore, the roller body 20 is attached to the support body 12 in a state of being expanded in the radial direction. Accordingly, the roller body 20 (i.e., inner peripheral edge 25) exerts elastic force on the support body 12 (i.e., inner peripheral surface of the annular groove 13) inwardly in the radial direction. With the above, the roller body 20 is stably attached to the support body 12 and less likely to become detached outwardly in the radial direction. Here, the inner diameter D2 may be approximately equal to the outer diameter D1.

Next, the structure that the first and second protrusions 26A, 26B are engaged with the first and second branched grooves 14A, 14B is further described in detail with reference to Figs. 5 to 7.

As illustrated in Fig. 5, the first and second protrusions 26A, 26B protrude bilaterally in the axial direction from the same circumferential position of the inner peripheral edge 25. Specifically, as illustrated in Fig. 6, the first protrusion 26A is structured to protrude outward in the axial direction from the side wall 22 and the second protrusion 26B is structured to further protrude inward in the axial direction from the enlarged portion 25A.

Pluralities (eight pieces for each in the present embodiment) of the first and second protrusions 26A, 26B are arranged respectively in the circumferential direction. The respective positions of protrusions 26A, 26B arranged at one inner peripheral edge 25 are matched with the respective positions of protrusions 26A, 26B arranged at the other inner peripheral edge 25 in the circumferential direction.

The branched groove 14 is configured with first and second branched grooves 14A, 14B. The first and second branched grooves 14A, 14B are branched out, respectively, to the outer side and the inner side in the axial direction from the same circumferential position of the annular groove 13, 13. Accordingly, an intersecting section of the annular groove 13 and the branched groove 14 is cross-shaped. The first branched groove 14A extends to an end face 12C, 12D along the axial direction and is opened to the end face 12C, 12D. The axial length of the first branched groove 14A is longer than the protruding length of the first protrusion 26A.

The second branched groove 14B extends inward in the axial direction by approximately the same length as the protruding length of the second protrusion 26B and does not extend to side faces 18C, 18D of the flange sections 18, 18. Accordingly, an end section of the second branched groove 14B is closed off at a dead end face 14E. The dead end face 14E is a flat face perpendicular to the axial direction. The branched grooves 14A, 14B are arranged at positions corresponding to the respective inner peripheral edges 25 being matched with the first and second protrusions 26A, 26B.

As described above, owing to that the respective inner peripheral edges 25 are fitted in the respective annular grooves 13, the roller body 20 is attached to the support body 12. At that time, the respective first and second protrusions 26A, 26B are arranged to protrude bilaterally in the axial direction from the annular groove 13 and are fitted respectively in the first and second branched grooves 14A, 14B. Accordingly, when the roller body 20 is to be rotated in the circumferential direction against the support body 12, sliding rotation of the roller body 20 is prevented by engagement of the protrusions 26A, 26B with the peripheral surfaces (groove-side faces) of the branched grooves 14A, 14B.

As is evident from Fig. 7, the branched groove 14A, 14B having a similar cross-sectional shape as the annular groove 13 is formed with a groove bottom face 14X being cross-sectionally semicirculard or arc-shaped and groove side faces 14Y, 14Y being flat faces approximately parallel to the radial direction. To be approximately matched with the inner peripheral surfaces of the branched grooves 14A, 14B, each of the first and second protrusions 26A, 26B is formed with a bottom face (inner-peripheral side face) 26X being cross-sectionally semicircular or arc-shaped and side faces 26Y, 26Y being flat faces approximately parallel to the radial direction and integral with the inner peripheral edge 25. Accordingly, the first and second protrusions 26A, 26B are fitted in the branched grooves 14A, 14B having the outer peripheral surfaces (bottom face 26X and side faces 26Y, 26Y) thereof in intimate contact with the inner peripheral surfaces (groove bottom face 14X and groove side faces 14Y, 14Y) of the branched grooves 14A, 14B.

Further, as illustrated in Fig. 6, top end faces 26C, 26C (end faces in the axial direction) of the first and second protrusions 26A, 26B are flat faces approximately perpendicular to the axial direction. The top end face 26C of the second protrusion 26B is in intimate contact with the dead end face 14E of the second branched groove 14B. Further, upper faces 26U, 26U (faces on the outer peripheral side) of the first and second protrusions 26A, 26B are approximately perpendicular to the radial direction and are connected to the side faces 26Y, 26Y and the top end faces 26C, 26C at approximately 90 degree angles. Here, the upper face 26U of the second protrusion 26B is integrated and forms a flush face with an upper face of the enlarged portion 25A that is approximately perpendicular to the radial direction.

In the present embodiment, the roller body 20 is attached to the support body 12 in a state of being extended in the circumferential direction in addition to the abovementioned radial direction. That is, prior to attachment of the roller body 20 to the support body 12, a circumferential distance separating the adjacently arranged first protrusions 26A, 26A (or the second protrusions 26B, 26B) is shorter than the circumferential distance between the adjacently arranged first branched grooves 14A, 14A (or the second branched grooves 14B, 14B). Accordingly, the protrusion 26A, 26B presses the inner peripheral surfaces (groove side faces 14Y) of the branched groove 14A, 14B, thereby securing the roller body 20 to the support body 12 with greater stability.

For example, the roller body 20 is molded as an outer mold, which surrounds a core with an upper mold and a lower mold that are assembled to an outer periphery of the core of a mold and elastomer, such as rubber being poured and hardened between the outer mold and the core, but not particularly limited thereto. Here, each of the first and second protrusions 26A, 26B is molded by recess portions arranged at the outer mold and the core, respectively.

As described above, in the present embodiment, owing to that the protrusions 26A, 26B are fitted in the branched grooves 14A, 14B, the roller body 20 is prevented from being slidingly rotated in the circumferential direction against the support body 12, even without the use of an adhesive or the like. Further, since the inner peripheral edges 25, 25 are fitted in the annular grooves 13, 13, the roller body 20 is prevented from being moved in the axial direction against the support body 12.

Further, since the first branched groove 14A is opened to the end face 12C, 12D, it is possible to visually confirm from the end faces 12C, 12D side that the first protrusion 26A is fitted in the first branched groove 14A. Further, air inside the roller is vented and discharged outside of the roller via the penetration holes 30 owing to elastic force of the roller body 20, so that the roller body 20 becomes easily deformable in accordance with a pressing state. Accordingly, the contact area between a paper sheet and the roller body is more likely to be increased. With the above, in the present embodiment, a paper sheet is less likely to become displaced during conveyance, and stable conveyance can be achieved.

Here, in the present embodiment, similarly to the first branched groove 14A, the second branched groove 14B may be extended and opened to the side faces 18C, 18D of the flange section. According to such a structure, since the branched groove 14 penetrates in the axial direction, the branched groove can be easily formed with machining, for example. Here, eight sections of the branched grooves 14 are arranged at each of the respective annular grooves 13, 13. Any number thereof may be arranged as long as it is one or more.

Further, when the roller 10 is used as a driven roller, there may be a case to adopt a structure that enables sliding to occur between the support body 12 and the shaft 11 by rotating the support body 12 and the roller body 20 without rotation of the shaft 11. In this case, frictional heat is generated from the friction between the support body 12 and the shaft 11. Such frictional heat is effectively released by a number of penetration holes 30 through which air is fed and discharged and are arranged to surround the shaft 11. Further, in contrast to the case in which air is fed and discharged through a gap between the shaft 11 and the support body 12, it is possible to prevent foreign matter from entering around the shaft 11. Further, since a large space is created between the flange sections 18, 18 in the support body 12, the weight of the support body 12 can be reduced. Here, in a case that the shaft 11 is rotated along with the support body 12 and the roller body 20, the shaft (shaft portion) 11 may be integrated with the support body 12.

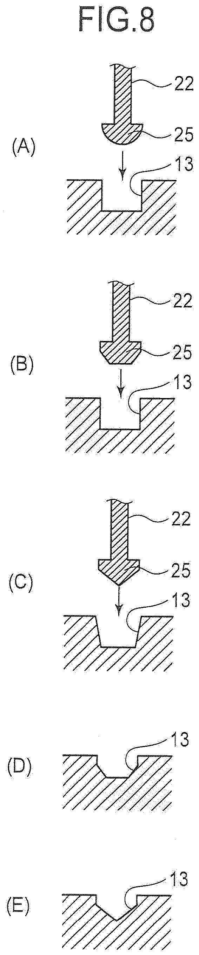

Further, the inner peripheral edge 25 has a cross-sectional circular shaped, but the shape is not limited thereto. For example, the inner peripheral edge 25 may have a cross-sectional shape being a semicircle with thickness becomes thinner toward the inner side in the radial direction, or it may have a rectangular shape with corners at the inner peripheral side that are chamfered as illustrated in Figs. 8(A) and 8(B), or it may have a five-sided cross-sectional shape with thickness of the bottom face becoming thinner toward the inner periphery, as illustrated in Fig. 8(C). In each of the above cases, the annular groove 13 may have a rectangular section as illustrated in Figs. 8(A) and 8(B) or may be trapezoidal as illustrated in Fig. 8(C). It is also possible to have a rectangular section having corners chambered or a pentagonal section as illustrated respectively in Figs. 8(D) and 8(E). That is, the annular groove 13 is not particularly limited in shape as long as the inner peripheral edge 25 can be fitted therein.

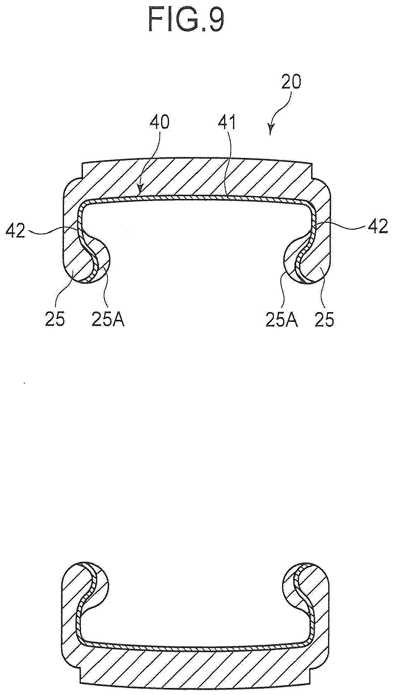

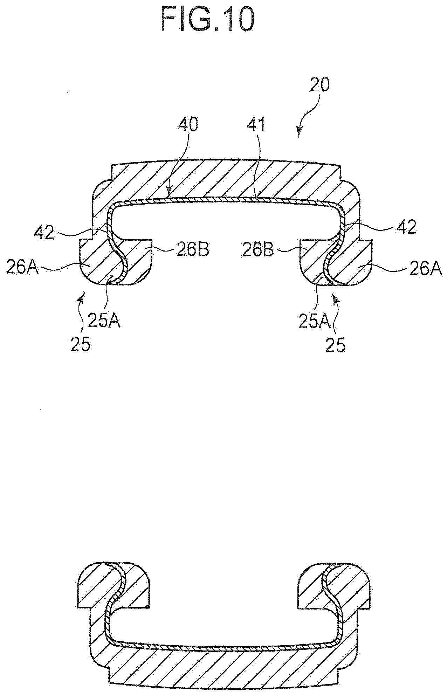

Figs. 9 and 10 are views illustrating a roller body according to a second embodiment of the present invention. The second embodiment is similar to the first embodiment except for the knitted fabric on the roller body. In the following, the present embodiment will be described with respect to points of difference from the first embodiment.

Knitted fabric 40 is arranged along the shape of the roller body 20 and bonded to the inner peripheral surface of the roller body 20. Specifically, the knitted fabric 40 includes a tubular portion 41 that is approximately tubular and arranged on the inner peripheral surface of the tubular portion 21 and ring-shaped annular portions 42, 42 that are arranged along the inner peripheral surfaces of both of the side walls 22, 22. Here, as illustrated in Figs. 9 and 10, the annular portions 42, 42 of the knitted fabric 40 are embedded into the roller body 20 (e.g., the enlarged portion 25A) at the inner peripheral edges 25, 25 of both side walls 22, 22. The embedded parts thereof are expanded inward in the axial direction and curved along the shape of the inner peripheral edges 25, 25. Here, the knitted fabric 40 is only required for the tubular section 21 for conveying a paper sheet, and the annular portions 42, 42 may be eliminated.

The knitted fabric 40 is formed by knitting yarns by arranging a plurality of loops in a plurality of lines, respectively, in a longitudinal direction and a lateral direction of the knitted fabric, for example, which has high elasticity in any direction. The knitted fabric 40 is knitted with flat knitting, rib knitting, loop knitting or the like, for example. It is preferable to have the knitted fabric 40 be electrically conductive and include electrically conductive yarns at least in part among the yarns.

The knitted fabric 40 may be processed with an impregnation process for drying after being soaked in mucilage obtained by diluting rubber with a solvent. In this case, the knitted fabric may not include electrically conductive yarns but instead may be provided with electrical conductivity by impregnation with electrically conductive mucilage in which electrically conductive material such as carbon black is included.

The roller body 20, according to the second embodiment, is manufactured similarly to the first embodiment except for being molded with an elastomer poured between a core and an outer mold after the knitted fabric is wound to an outer periphery of the core of a mold. In such a manufacturing process according to the present embodiment, elastomer structuring the roller body 20 permeates a part or all of the knitted fabric 40 (between knitted yarns of the knitted fabric 40). A part of the elastomer exudes or leaks to the inner peripheral side (i.e., inner side in the axial direction) of the knitted fabric 40 at the inner peripheral edges 25, 25 and the knitted fabric is embedded on the inside of the inner peripheral edges 25, 25. At that time, since the elastomer presses the knitted fabric 40 to the inner peripheral edges 25, 25, the knitted fabric 40 is shaped as being expanded inward, as illustrated in Figs. 9 and 10. In the present embodiment, mold release-ability for releasing the roller body 20 from the core is improved owing to the arrangement of the knitted fabric 40.

In the present embodiment, the knitted fabric 40 is arranged as being exposed to the inner peripheral surface of the roller body 20. Here, it is also possible to be embedded on the inside of the roller body 20 as long as it is not exposed to the outer peripheral surface of the roller body 20. At that time, the knitted fabric 40 need not be exposed at all to the inner peripheral surface of the roller body 20. Alternatively, it is also possible to have a part of the knitted fabric 40 exposed to the inner peripheral surface and a part thereof is embedded on the inside but not exposed to the inner peripheral surface of the roller body 20.

In this case, the roller body is manufactured as a part of elastomer exuding to the inner peripheral side of the knitted fabric 40 even at a part other than the inner peripheral edges 25, 25. Here, it is also possible to manufacture the roller body by pouring elastomer between an outer mold and a core after an elastomer sheet and knitted fabric are wound around the core in that order. Further, it is also possible to manufacture the roller body by vulcanization forming with press heating after an elastomer sheet, knitted fabric and an elastomer sheet are wound around the core in that order.

In the present embodiment, since cushioning characteristics of the roller body 20 can be improved by applying highly elastic knitted fabric 40 to the roller body 20, conveying performance of the roller body 20 can be improved.

Further, in a case that the knitted fabric 40 is electrically conductive, since the roller body 20 is thin, electrostatic charge at the outer peripheral surface of the roller body 20 can be sufficiently prevented so that, for example, double-feeding and the like at the time of sheet feeding can be prevented even when the knitted fabric 40 is embedded inside of the roller body 20 or is arranged on the inner peripheral surface. Further, since the knitted fabric 40 is not exposed to the outer peripheral surface of the roller body 20, physical properties of the roller outer peripheral surface are not varied. Accordingly, when the knitted fabric 40 is electrically conductive, a charge-preventing function can be provided to the roller body 20 without decreasing wear resistance and a friction coefficient of the roller outer peripheral surface.

In addition, in a case that the knitted fabric 40 is electrically conductive, electrically conductive material such as carbon black is not required to be included to the roller body in large quantity. Accordingly, flexibility of the roller body 20 can be improved and color transfer from the roller outer peripheral surface to a paper sheet can be prevented by structuring the roller body with light-colored elastomer.

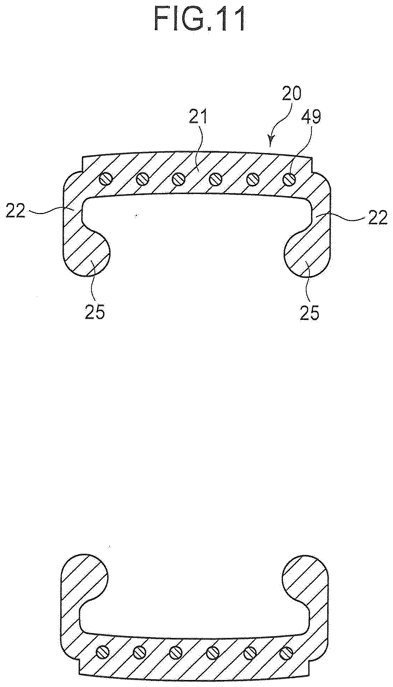

Further, in the present embodiment, a core wire 49 spirally wound along the circumferential direction may be embedded inside of the tubular section 21 instead of arranging the knitted fabric 40, as illustrated in Fig. 11. In this case, it is preferable that the core wire 49 includes a conductor yarn. Here, the core wire 49 is wound to the outer periphery of a core of a mold instead of the knitted fabric, for example, in a process of manufacturing the roller body 20.

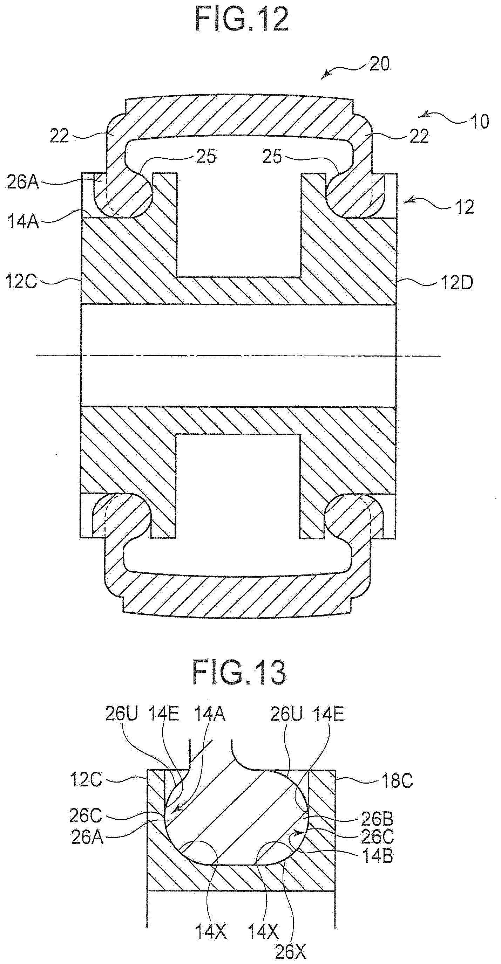

Fig. 12 illustrates a paper sheet conveying roller according to a third embodiment of the present invention. In the first embodiment, the first and second protrusions 26A, 26B are arranged at the inner peripheral edge 25. In the present embodiment, the second protrusion 26B is eliminated. That is, in the present embodiment, although the first protrusion 26A protruding outward in the axial direction is arranged at the inner peripheral edge 25, any protrusion protruding inward in the axial direction is not arranged. Accordingly, regarding the branched grooves, the second branched groove is eliminated while the first branched groove 14A is arranged.

In the first embodiment, since the first and second protrusions 26A, 26B are arranged at the circumferentially same position, positioning between a core and an outer mold is required to be performed when manufacturing the roller body 20. In contrast, since the second protrusion is eliminated in the present embodiment, such positioning is not required to be performed.

Instead of eliminating the second protrusion 26B and the second branched groove 14B, it is also possible to eliminate the first protrusion 26A and the first branched groove 14A. Here, when the first protrusion 26A is eliminated, it is not possible to visually confirm from the end face 12C, 12D side that the protrusion is fitted in the branched groove. Therefore, it is more preferable to eliminate the second protrusion 26B.

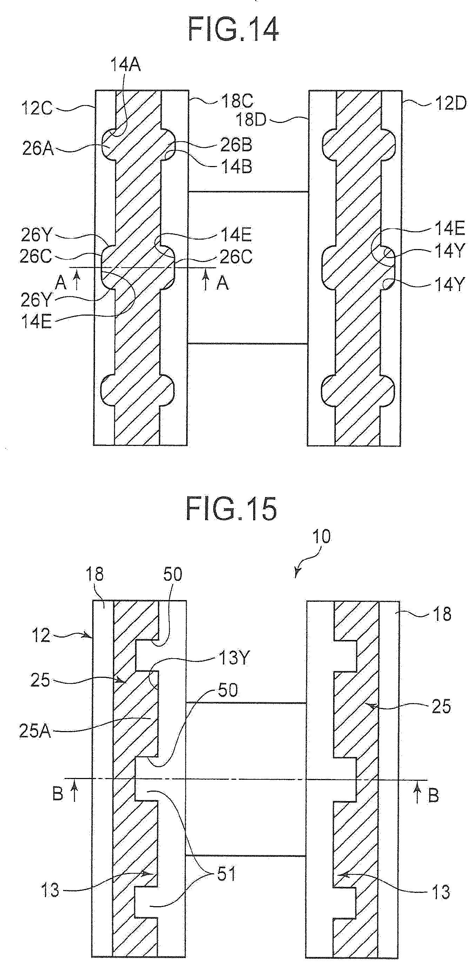

Figs. 13 and 14 illustrate a paper sheet conveying roller according to a fourth embodiment of the present invention. In the first embodiment, the first branched groove 14A is extended to the end faces 12C, 12D. In the present embodiment, similarly to the second branched groove 14B, the first branched groove 14A is extended by the same protruding length as the first protrusion 26A and is not extended to the end faces 12C, 12D.

Further, in the present embodiment, the width and height of the first and second protrusions 26A, 26B become smaller toward the top end faces 26C, 26C. That is, in each of the first and second protrusions 26A, 26B, an upper face 26U and a bottom face 26X are formed to be mutually closed toward the top end face 26C and both side faces 26Y, 26Y are formed to be mutually closed toward the top end face 26C, as well. According to the structure described above, stress is less likely to be concentrated at base ends of the protrusions 26A, 26B and protrusion breakage can be prevented. Here, the bottom face 26X, the upper face 26U, and the side faces 26Y of each protrusion 26A, 26B are curve-shaped. However, it is also possible to be obliquely plane-shaped.

In the present embodiment, each inner peripheral surface of the first and second branched grooves 14A, 14B has a shape matched with the shape of each outer peripheral surface of the first and second protrusions 26A, 26B. The groove bottom face 14X of the branched groove 14A, 14B is inclined outward in the radial direction with closing to the dead end face 14E, 14E of the branched groove 14A, 14B. The groove side faces 14Y, 14Y are formed to be mutually closed with closing toward the dead end face 14E, 14E. The outer peripheral surface (the top end face 26C, the bottom face 26X, and side faces 26Y, 26Y) of the protrusion 26A, 26B makes intimate contact with the inner peripheral surface (the dead end face 14E, the groove bottom face 14X, and the groove side faces 14Y, 14Y) of the branched groove 14A, 14B.

In the present embodiment as well, owing to that the protrusions 26A, 26B are fitted in the branched grooves 14A, 14B, the roller body is prevented from being slidingly rotated. Here, in the present embodiment as well, similarly to the first embodiment, at least one of the branched grooves 14A, 14B may be opened to the end faces 12C, 12D or the side faces 18C, 18D. Further, one of the protrusions 26A, 26B and one of the branched grooves 14A, 14B may be eliminated. Further, not limited to the shapes of the first and fourth embodiments, for example, the branched grooves 14A, 14B and the protrusions 26A, 26B may have a cross-sectional shape being a rectangle, a pentagon, or the like as being similar to the inner peripheral edge 25 and the annular groove 13.

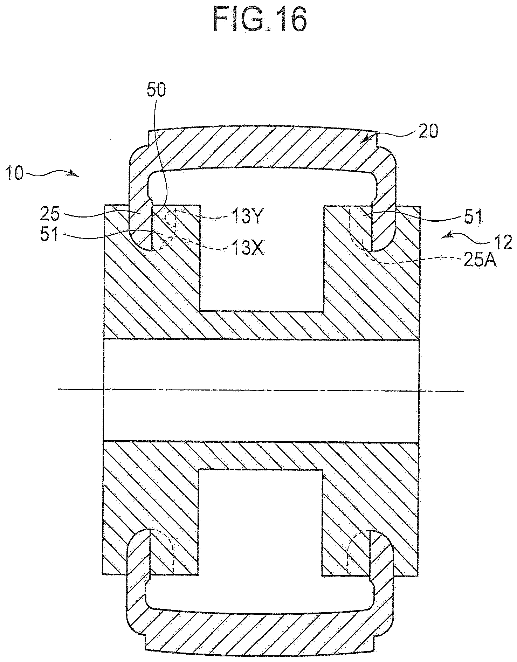

Figs. 15 and 16 illustrate a paper sheet conveying roller according to a fifth embodiment of the present invention. In each of the abovementioned embodiments, the protrusion is arranged at the inner peripheral edge 25 and the branched groove (recess) is arranged at the annular groove 13. In the present embodiment, a recess 50 is arranged at the inner peripheral edge 25 and a protrusion 51 is arranged at the annular groove 13.

In the present embodiment, the inner peripheral edge 25 has a shape from which the swelled portion 25A is removed at a part in the circumferential direction. Accordingly, a recess 50 concaved outward from an inner face along the axial direction is formed at the inner peripheral edge 25. Similarly to the protrusions of the first embodiment, a plurality of the recesses 50 is arranged at each inner peripheral edge 25.

The protrusion 51 is arranged at a position being matched with the recess 50 in the circumferential direction and has a shape being matched with the shape of the recess 50. Specifically, the protrusion 51 has a shape to plug approximately a half of the annular groove 13 at the inner side in the axial direction as being projected outward in the axial direction from one groove side face 13Y (inner groove side face 13Y) of the annular groove 13 and connected to a half of the groove bottom face 13X. Each protrusion 51 is fitted in each recess 50 which is arranged at the matched position, thereby sliding rotation of the roller body 20 is prevented similarly to the first embodiment.

Here, in the present embodiment, the recess 50 may be concave inward from an outer face of the inner peripheral edge 25 along the axial direction. In this case, the protrusion 51 protrudes inward in the axial direction from the outer groove side face 13Y of the annular groove 13.

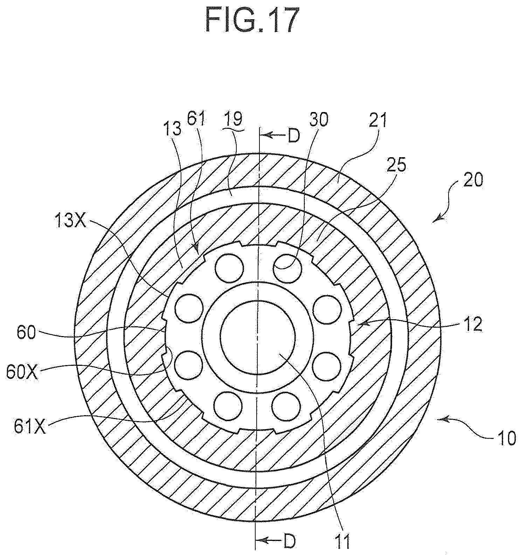

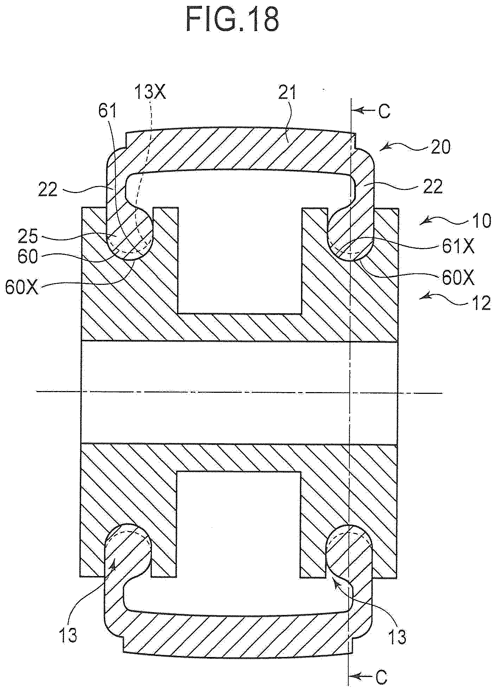

Figs. 17 and 18 illustrate a paper sheet conveying roller according to a sixth embodiment of the present invention. In the first embodiment, the protrusions 26A, 26B are protruded along the axial direction from the inner peripheral edge 25. In the present embodiment, a protrusion 60 protrudes inward in the radial direction from the inner peripheral edge 25.

The protrusion 60 has a shape being further protruded inward in the radial direction from the inner peripheral edge 25 at a part of the inner peripheral edge 25 in the circumferential direction. A top end face 60X of the protrusion 60 is formed as being cross-sectionally arc-shaped, for example. In the present embodiment, pluralities of the protrusions 60 are arranged at the inner peripheral edges 25, 25 as being similar to the first embodiment.

Meanwhile, recesses 61 are arranged at positions matched with the protrusions 60 of the annular grooves 13, 13. The recess 61 is further concave inward in the radial direction from the groove bottom face 13X of the annular groove 13. A bottom face 61X of the recess 61 is formed as being cross-sectionally arc-shaped to be matched with the top end face 60X of the protrusion 60 and makes intimate contact with the top end face 60X. According to the present embodiment as well, each protrusion 60 is fitted in each recess 61, thereby sliding rotation of the roller body 20 is prevented.

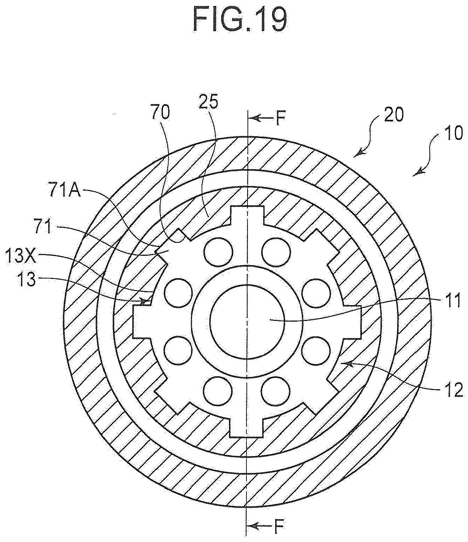

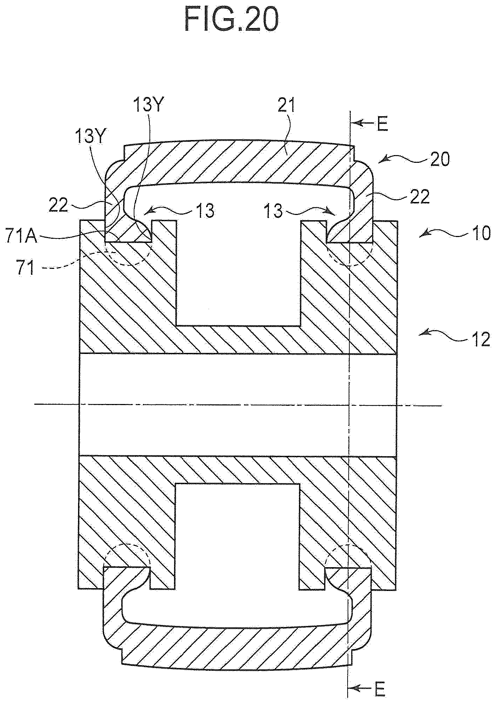

Figs. 19 and 20 illustrate a paper sheet conveying roller according to a seventh embodiment of the present invention. In the sixth embodiment, the protrusion 60 protruding inward in the radial direction is arranged at the inner peripheral edge 25. In the present embodiment, a recess 70 concave outward along the radial direction from an inner face (inner peripheral surface) is arranged at the inner peripheral edge 25.

In the present embodiment, the inner peripheral edge 25 being approximately cross-sectionally circular has a shape having an approximately semicircular part at the inner side (inner peripheral side) in the radial direction removed at a part in the circumferential direction, thereby the recess 70 is formed concave outward in the radial direction from the inner side in the radial direction of the inner peripheral edge 25. Meanwhile, a protrusion 71 protruding outward in the radial direction from the groove bottom face 13X is formed at the annular groove 13. The protrusion 71 has a shape being matched with the recess 70 as plugging an inner part (e.g., a half-circle part) at the bottom side of the groove 13. Here, at a part where the protrusion 71 is formed, the annular groove 13 is formed as being approximately cross-sectionally rectangular with a top end face 71A of the protrusion 71 and groove side faces 13Y, 13Y of the annular groove 13.

Pluralities of the protrusions 71 and recesses 70 are arranged in the circumferential direction. Each protrusion 71 is arranged at a position being matched with each recess 70 in the circumferential direction. Each protrusion 71 is fitted in each recess 70, thereby sliding rotation of the roller body 20 is prevented in the present embodiment as well.

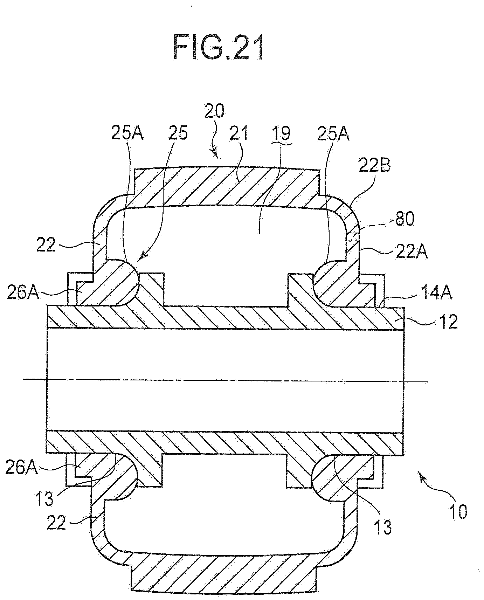

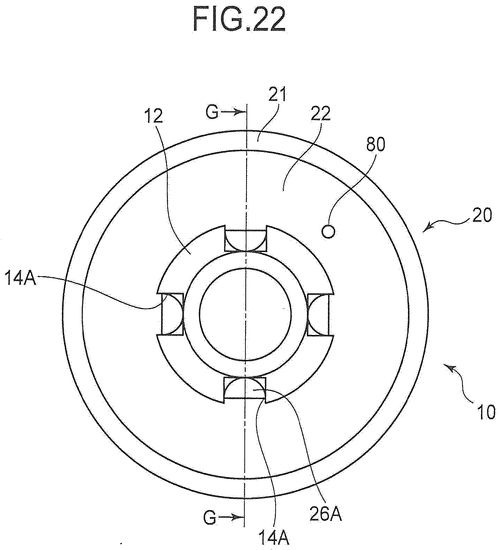

Figs. 21 and 22 illustrate a paper sheet conveying roller according to an eighth embodiment of the present invention. Similarly to the third embodiment, the roller according to the present embodiment is provided with the first protrusion 26A and the first branched groove 14A but not with the second protrusion and the second branched groove. Here, in the present embodiment, penetration holes are not arranged at the support body 12. Alternatively, an air vent 80 which provides access between the cavity at the roller inside and the outside of the roller is arranged at the side wall 22 of the roller body 20. In the following, the eighth embodiment will be described on points of difference from the third embodiment.

In the present embodiment, the side wall 22 is relatively thin as being thinner than the radius of the inner peripheral edge 25. The side wall 22 includes a flat face section 22A, which is interconnected with the inner peripheral edge 25 being approximately cross-sectionally circular and arranged approximately perpendicular to the axial direction, and an arc-shaped connection section 22B which connects the flat face section 22A and the tubular section 21. The air vent 80 is arranged to penetrate the flat face section 22A. The air vent 80 is molded at the time of roller body molding by a pin arranged at an outer mold, for example. Owing to being arranged at the flat face section 22A, the molding is facilitated. Although the air vent 80 is arranged in only one side wall 22 in Figs. 21 and 22, it is more preferable to be arranged in both of the side walls 22, 22. Further, any number of the air vents 80 may be arranged as long as being one or greater.

A first protrusion 26A according to the present embodiment is cross-sectionally semicircle-shaped having the width tapered toward the inner side in the radial direction while the height (radius) is lower than the height (diameter) of the inner peripheral edge 25, for example, as being approximately the same as the radius of the inner peripheral edge 25. The first protrusion 26A is interconnected with an inner part of the inner peripheral edge 25 in the radial direction and a bottom part of the first protrusion 26A is evenly connected to a bottom part of the inner peripheral edge 25.

Further, in the present embodiment, the annular groove 13 has a cross-sectional shape being approximately semicircular and the inner peripheral edge 25 is arranged as having a part thereof protruding toward the outer peripheral side while the outer peripheral surface thereof is in intimate contact with the inner peripheral surface of the annular groove 13, as illustrated in Fig. 21. Meanwhile, the branched groove 14A has a cross-sectional shape being approximately rectangular elongated in the circumferential direction. The length thereof is approximately the same as the diameter of the protrusion 26A and the height thereof is larger than the radius of the protrusion 26A. Accordingly, the protrusion 26A is fitted in the branched groove 14A in contact with both side faces and the bottom face of the branched groove 14A so as to be accommodated in the branched groove 14A.

Similarly to the abovementioned embodiments, in the present embodiment as well, since air in the cavity 19 enters into and is discharged from the outside of the roller via the air vent 80 owing to an elastic force of the roller body 20, the roller body 20 is easily deformable in accordance with a pressing state. Accordingly, in the present embodiment as well, the contact area between a paper sheet and the roller body is more likely to be increased and stable conveyance can be actualized. Further, since penetration holes are not required to be arranged in the support body 12, the support body 12 is more likely to be downsized. Furthermore, owing to the above structure of the protrusion 26A, the inner peripheral edge 25, the branched groove 14A and the annular groove 13, the roller body is capable of being easily attached to the support body and sliding rotation is appropriately prevented.

Here, without any specific limitations, the shapes of the protrusion 26A and the like may be similar to those of the third embodiment. Further, shapes in the present embodiment may be adopted by the above embodiments, as well. Further, in the above embodiments as well, an air vent hole may be configured in the roller body instead of providing penetration holes in the support body.

## Claims

1. A paper sheet conveying roller, comprising:
a support body (12) which has first and second annular grooves (13) formed on an outer peripheral surface and at which a shaft portion (11) is arranged; and
a roller body (20) formed with a tubular section (21), which is arranged to form a cavity (19) between the support body (12) and the tubular section (21) at an outer peripheral of the support body, and first and second ring-shaped walls (22) that are interconnected, respectively, with both ends of the tubular section (21) in the axial direction and have respective inner peripheral edges (25) fitted in the first and second annular grooves (13), respectively;
a protrusion or recess (26A, 26B) being arranged at a circumferential part of an inner peripheral edge (25) of at least one of the first and second side walls (22), and a recess or a protrusion (26A, 26B) fitted to the protrusion or recess (26A, 26B) being provided in at least one of the first and second annular grooves (13).

2. The paper sheet conveying roller according to claim 1, wherein the protrusion (26A, 26B) protrudes in the axial direction from the circumferential part of the inner peripheral edge (25); and the recess is configured so that it branches out from at least one of the first and second annular grooves (13).

3. The conveying roller according to claim 2, wherein the recess is a groove (14A, 14B) that extends outward in the axial direction from at least one of the first and second annular grooves (13) and is opened to an end face of the support body (12) in the axial direction.

4. The paper sheet conveying roller according to claim 2 or claim 3, wherein the protrusion (26A, 26B) protrudes outward in the axial direction from the circumferential part of the inner peripheral edge (25).

5. The paper sheet conveying roller according to any one of claims 2 to 4, wherein the protrusion (26A, 26B) protrudes bilaterally in the axial direction from the circumferential part of the inner peripheral edge (25).

6. The paper sheet conveying roller according to any one of claims 2 to 5, wherein the inner peripheral edge (25) is formed thick; and the protrusion (26A, 26B) protrudes in the axial direction from the thickly formed inner peripheral edge (25).

7. The paper sheet conveying roller according to claim 1, wherein the inner peripheral edge (25) is formed thick, and the recess is concave in the axial direction at the thickly formed inner peripheral edge (25).

8. The paper sheet conveying roller according to claim 1, wherein the protrusion (26A, 26B) protrudes inward in the radial direction from the inner peripheral edge (25), and the recess is concave inward in the radial direction from a bottom face of the annular groove (13).

9. The paper sheet conveying roller according to claim 1, wherein the recess is concave outward in the radial direction from an inner side of the inner peripheral edge (25), and the protrusion (26A, 26B) protrudes outward in the radial direction from a bottom face of the annular groove (13).

10. The paper sheet conveying roller according to any one of claims 1 to 9, wherein a plurality of the protrusions (26A, 26B) or recesses is circumferentially configured on the inner peripheral edge (25).

11. The paper sheet conveying roller according to any one of claims 1 to 10, wherein knitted fabric placed on an inner peripheral surface or embedded internally is arranged in the roller body (20) so as not to be exposed to the outer peripheral surface.

12. The paper sheet conveying roller according to any one of claims 1 to 11, wherein an air vent hole (80) allowing air to enter and be discharged from the cavity (19) is configured in the roller body (20).

## Patentansprüche

1. Walze zur Förderung von Papierbahnen, umfassend:
einen Stützkörper (12), der erste und zweite ringförmige Nuten (13) hat, die auf einer äußeren Umfangsfläche ausgebildet sind, und an dem ein Schaftabschnitt (11) angeordnet ist; und
einen Walzenkörper (20), der mit einem rohrförmigen Abschnitt (21) ausgebildet und angeordnet ist, um einen Hohlraum (19) zwischen dem Stützkörper (12) und dem rohrförmigen Abschnitt (21) an einem Außenumfang des Stützkörpers auszubilden, und mit ersten und zweiten ringförmigen Wänden (22), die entsprechend mit beiden Enden des rohrförmigen Abschnitts (21) in axialer Richtung verbunden sind und jeweilige innere Umfangskanten (25) haben, die in die ersten bzw. zweiten ringförmigen Nuten (13) eingepasst sind;
wobei ein Vorsprung oder eine Aussparung (26A, 26B) an einem Umfangsteil einer inneren Umfangskante (25) mindestens einer der ersten und zweiten Seitenwände (22) angeordnet ist, und eine Aussparung oder ein Vorsprung (26A, 26B), die bzw. der zu dem Vorsprung oder der Aussparung (26A, 26B) passt, in mindestens einer der ersten und zweiten ringförmigen Nuten (13) vorgesehen ist.

2. Walze zur Förderung von Papierbahnen nach Anspruch 1, wobei der Vorsprung (26A, 26B) in axialer Richtung von dem Umfangsteil der inneren Umfangskante (25) vorsteht; und die Aussparung so ausgebildet ist, dass sie sich ab mindestens einer der ersten und zweiten ringförmigen Nuten (13) verzweigt.

3. Förderwalze nach Anspruch 2, wobei die Aussparung eine Nut (14A, 14B) ist, die sich in axialer Richtung ab mindestens einer der ersten und zweiten ringförmigen Nuten (13) nach außen erstreckt und zu einer Endfläche des Stützkörpers (12) in axialer Richtung hin offen ist.

4. Walze zur Förderung von Papierbahnen nach Anspruch 2 oder Anspruch 3, wobei der Vorsprung (26A, 26B) in axialer Richtung ab dem Umfangsteil der inneren Umfangskante (25) nach außen vorsteht.

5. Walze zur Förderung von Papierbahnen nach einem der Ansprüche 2 bis 4, wobei der Vorsprung (26A, 26B) in axialer Richtung ab dem Umfangsteil der inneren Umfangskante (25) bilateral vorsteht.

6. Walze zur Förderung von Papierbahnen nach einem der Ansprüche 2 bis 5, wobei die innere Umfangskante (25) dick ausgebildet ist; und der Vorsprung (26A, 26B) in axialer Richtung ab der dick ausgebildeten inneren Umfangskante (25) vorsteht.

7. Walze zur Förderung von Papierbahnen nach Anspruch 1, wobei die innere Umfangskante (25) dick ausgebildet ist, und die Aussparung in axialer Richtung an der dick ausgebildeten inneren Umfangskante (25) konkav ist.

8. Walze zur Förderung von Papierbahnen nach Anspruch 1, wobei der Vorsprung (26A, 26B) in radialer Richtung ab der inneren Umfangskante (25) nach innen vorsteht, und die Aussparung in radialer Richtung ab einer Bodenfläche der ringförmigen Nut (13) nach innen konkav ist.

9. Walze zur Förderung von Papierbahnen nach Anspruch 1, wobei die Aussparung in radialer Richtung ab einer Innenseite der inneren Umfangskante (25) nach außen konkav ist, und der Vorsprung (26A, 26B) in radialer Richtung ab einer Bodenfläche der ringförmigen Nut (13) nach außen vorsteht.

10. Walze zur Förderung von Papierbahnen nach einem der Ansprüche 1 bis 9, wobei eine Vielzahl von Vorsprüngen (26A, 26B) oder Aussparungen auf der inneren Umfangskante (25) in Umfangsrichtung ausgebildet ist.

11. Walze zur Förderung von Papierbahnen nach einem der Ansprüche 1 bis 10, wobei gestricktes Gewebe, das auf einer inneren Umfangsfläche platziert oder intern eingebettet ist, in dem Walzenkörper (20) so angeordnet ist, dass es der äußeren Umfangsfläche nicht ausgesetzt ist.

12. Walze zur Förderung von Papierbahnen nach einem der Ansprüche 1 bis 11, wobei ein Entlüftungsloch (80), das ermöglicht, dass Luft in den Hohlraum (19) eintritt oder aus diesem abgeleitet wird, in dem Walzenkörper (20) ausgebildet ist.

## Revendications

1. Rouleau de transport de feuille de papier, comprenant :
un corps de support (12) qui a des première et seconde rainures annulaires (13) formées sur une surface périphérique extérieure et au niveau duquel une partie d'arbre (11) est agencée ; et
un corps de rouleau (20) formé avec une section tubulaire (21), qui est agencé pour former une cavité (19) entre le corps de support (12) et la section tubulaire (21) au niveau d'une périphérie externe du corps de support, et des première et seconde parois en forme d'anneau (22) qui sont interconnectées, respectivement, avec les deux extrémités de la section tubulaire (21) dans la direction axiale et ont des bords périphériques intérieurs respectifs (25) montés respectivement dans les première et seconde rainures annulaires (13) ;
une protubérance ou un évidement (26A, 26B) étant agencé(e) au niveau d'une partie circonférentielle d'un bord périphérique intérieur (25) d'au moins une des première et seconde parois latérales (22), et un évidement ou une protubérance (26A, 26B) adapté(e) à la protubérance ou à l'évidement (26A, 26B) étant prévu(e) dans au moins l'une des première et seconde rainures annulaires (13).

2. Rouleau de transport de feuille de papier selon la revendication 1, dans lequel la protubérance (26A, 26B) fait saillie dans la direction axiale depuis la partie circonférentielle du bord périphérique intérieur (25) ; et l'évidement est configuré de telle sorte qu'il se ramifie à partir d'au moins l'une des première et seconde rainures annulaires (13).

3. Rouleau de transport selon la revendication 2, dans lequel l'évidement est une rainure (14A, 14B) qui s'étend vers l'extérieur dans la direction axiale à partir d'au moins l'une des première et seconde rainures annulaires (13) et est ouverte vers une face d'extrémité du corps de support (12) dans la direction axiale.

4. Rouleau de transport de feuille de papier selon la revendication 2 ou la revendication 3, dans lequel la protubérance (26A, 26B) fait saillie vers l'extérieur dans la direction axiale à partir de la partie circonférentielle du bord périphérique intérieur (25).

5. Rouleau de transport de feuille de papier selon l'une quelconque des revendications 2 à 4, dans lequel la protubérance (26A, 26B) fait saillie bilatéralement dans la direction axiale depuis la partie circonférentielle du bord périphérique intérieur (25).

6. Rouleau de transport de feuille de papier selon l'une quelconque des revendications 2 à 5, dans lesquelles le bord périphérique intérieur (25) est formé épais ; et la protubérance (26A, 26B) fait saillie dans la direction axiale à partir du bord périphérique intérieur formé épais (25).

7. Rouleau de transport de feuille de papier selon la revendication 1, dans lequel le bord périphérique intérieur (25) est formé épais, et l'évidement est concave dans la direction axiale au niveau du bord périphérique intérieur formé épais (25).

8. Rouleau de transport de feuille de papier selon la revendication 1, dans lequel la protubérance (26A, 26B) fait saillie vers l'intérieur dans la direction radiale à partir du bord périphérique intérieur (25), et l'évidement est concave vers l'intérieur dans la direction radiale à partir d'une face inférieure de la rainure annulaire (13).

9. Rouleau de transport de feuille de papier selon la revendication 1, dans lequel l'évidement est concave vers l'extérieur dans la direction radiale à partir d'un côté intérieur du bord périphérique intérieur (25), et la protubérance (26h, 26B) fait saillie vers l'extérieur dans la direction radiale à partir d'une face inférieure de la rainure annulaire (13).

10. Rouleau de transport de feuille de papier selon l'une quelconque des revendications 1 à 9, dans laquelle une pluralité des protubérance (26A, 26B) ou des évidements sont configuré(e)s circonférentiellement sur le bord périphérique intérieur (25).

11. Rouleau de transport de feuille de papier selon l'une quelconque des revendications 1 à 10, dans lequel du tissu tricoté placé sur une surface périphérique intérieure ou enfoui intérieurement est agencé dans le corps de rouleau (20) de manière à être exposé à la surface périphérique extérieure.

12. Rouleau de transport de feuille de papier selon l'une quelconque des revendications 1 à 11, dans lequel un trou d'aération (80) permettant à de l'air d'entrer et d'être évacué de la cavité (19) est configuré dans le corps de rouleau (20).
